(19) **Europäisches Patentamt**
**European Patent Office**
**Office européen des brevets**

(11) **EP 1 936 791 A2**

(12) **EUROPÄISCHE PATENTANMELDUNG**

(43) Veröffentlichungstag:
**25.06.2008 Patentblatt 2008/26**

(51) Int Cl.:
*H02M 3/155* (2006.01)

(21) Anmeldenummer: **07116886.8**

(22) Anmeldetag: **21.09.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **19.12.2006 AT 20842006**

(71) Anmelder: **SIEMENS AKTIENGESELLSCHAFT ÖSTERREICH**
**1210 Wien (AT)**

(72) Erfinder: **Rothmayer, Thomas**
**1180 Wien (AT)**

(54) **Schaltwandler**

(57)    Die Erfindung betrifft einen Schaltwandler mit einer primärseitigen Transformatorwicklung (P), deren erster Wicklungsanschluss über ein erstes Schaltelement (S1) an eine Versorgungsspannung (Uz) angeschlossen ist und deren zweiter Wicklungsanschluss über ein zweites Schaltelement (S2) an ein Bezugspotenzial angeschlossen ist, wobei der zweite Wicklungsanschluss über eine erste Diode (D1) und einen ersten Kondensator (C1) mit der Versorgungsspannung (Uz) verbunden ist und wobei der erste Wicklungsanschluss über eine zweite Diode (D2) und einen zweiten Kondensator (C2) an das Bezugspotenzial angeschlossen ist und wobei an jeden Kondensator (C1, C2) eine Einrichtung zur Erzeugung einer Vorspannung angeschaltet ist. Damit wird die Spannungsbelastung an den Schaltelementen (S1, S2) zum Zeitpunkt des Abschaltens begrenzt.

FIG 2

**Beschreibung**

Die Erfindung betrifft einen Schaltwandler mit einer primärseitigen Transformatorwicklung, deren erster Wicklungsanschluss über ein erstes Schaltelement an eine Versorgungsspannung angeschlossen ist und deren zweiter Wicklungsanschluss über ein zweites Schaltelement an ein Bezugspotenzial angeschlossen ist.

Nach dem Stand der Technik sind unterschiedliche Schaltwandler wie beispielsweise Sperrwandler oder Durchflusswandler bekannt. Unabhängig von der Ausprägung wird in einem Schaltwandler eine primärseitig anliegende Versorgungs-Gleichspannung mit hoher Frequenz getaktet über einen Transformator übertragen und sekundärseitige zu einer Ausgangsgleichspannung gleichgerichtet.

Das primärseitige Takten erfolgt dabei mittels elektronischer Schaltelemente. Diese Schaltelemente müssen dabei so ausgelegt sein, dass an Ihnen einerseits nur geringe Verluste entstehen und dass sie andererseits den anliegenden Spannungen dauerhaft standhalten. Dabei sind in der Regel Schaltelemente wie z.B. Schalttransistoren für niedrige Spannungen billiger als solche, die für das Schalten höherer Spannungen geeignet sind. Zudem weisen besonders spannungsfeste Schalttransistoren schlechte elektrische Eigenschaften auf.

Für Schaltwandler sind deshalb Topologien bekannt, bei welchen eine Primärwicklung des Transformators mittels zweier Schaltelemente an die Versorgungsspannung angeschaltet ist. Damit wird gegenüber einer Topologie mit nur einem Schaltelement eine Halbierung der an jedem einzelnen Schaltelement anliegenden Spannung erreicht. Es können demnach kostengünstigere Schaltelemente mit besseren elektrischen Eigenschaften verwendet werden.

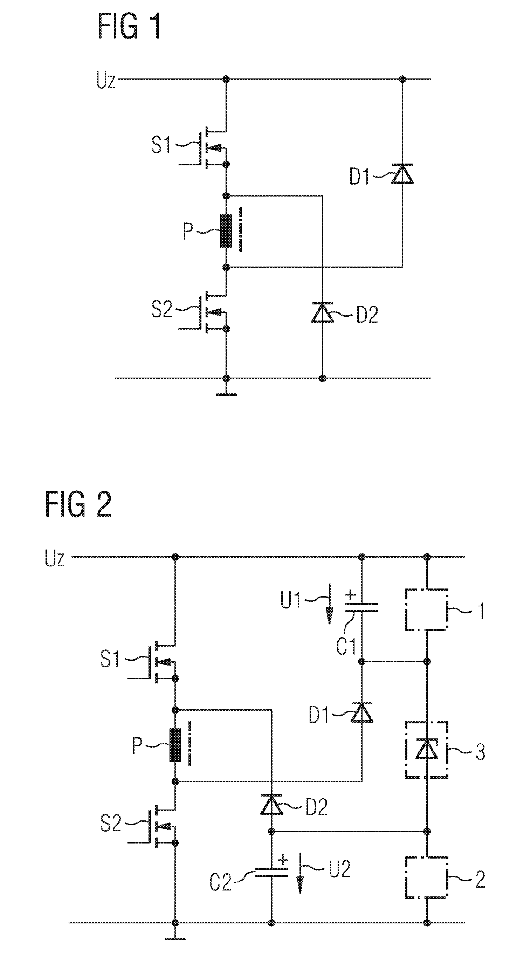

In Figur 1 ist eine beispielhafte Schaltungsanordnung nach dem Stand der Technik dargestellt. Die beiden Schaltelemente werden immer gleichzeitig geschaltet. Beim Abschalten der Schaltelemente verbleibt überschüssige Energie im Transformator. Bevor der nächste Taktzyklus beginnen kann, muss diese Energie abgegeben werden. Das wird durch die Anordnung von Abmagnetisierungsleitungen erreicht, in denen Abmagnetisierungsdioden angeordnet sind, über welche nach Abschaltung der Schaltelemente Strom zurück in den Versorgungskreis fließt.

Dabei dreht sich am Transformator die Polarität der Spannung um und die Spannung wird so hoch, bis ein Stromfluss zustande kommt. Die Spannungsbelastung an einem Schaltelement entspricht dann der Versorgungsspannung zuzüglich der Diodenspannung einer Abmagnetisierungsdiode.

Derartige Topologien haben den Nachteil, dass durch Flussverluste und Einschaltverzögerungen der Abmagnetisierungsdioden speziell bei Lastsprüngen hervorgerufene Spannungsspitzen an den Schaltelementen nicht ausreichend begrenzt und somit die Schaltelemente zerstört werden können.

Nach dem Stand der Technik werden deshalb z.B. besonders spannungsfeste Schalttransistoren eingesetzt, welche jedoch schlechte elektrische Eigenschaften aufweisen und so unerwünschte Verlustleistungen verursachen.

Der Erfindung liegt deshalb die Aufgabe zugrunde, für einen Schaltwandler der eingangs genannten Art eine Verbesserung gegenüber dem Stand der Technik anzugeben.

Erfindungsgemäß wird diese Aufgabe gelöst durch einen Schaltwandler mit einer primärseitigen Transformatorwicklung, deren erster Wicklungsanschluss über ein erstes Schaltelement an eine Versorgungsspannung angeschlossen ist und deren zweiter Wicklungsanschluss über ein zweites Schaltelement an ein Bezugspotenzial angeschlossen ist, wobei der zweite Wicklungsanschluss über eine erste Diode und einen ersten Kondensator mit der Versorgungsspannung verbunden ist und wobei der erste Wicklungsanschluss über eine zweite Diode und einen zweiten Kondensator an das Bezugspotenzial angeschlossen ist und wobei des Weiteren an jeden Kondensator eine Einrichtung zur Erzeugung einer Vorspannung angeschaltet ist. Die Polungen der Kondensatoren ist dabei so gewählt, dass der Abmagnetisierungsstrom vom positiven Pol des zweiten Kondensators über die Transformatorwicklung zum negativen Pol des ersten Kondensators fliest. Damit sind die zum Zeitpunkt des Abschaltens an den Schaltelementen auftretenden Spannungsspitzen um den Betrag der Vorspannung in den Kondensatoren geringer als bei einer direkten Anschaltung der Abmagnetisierungsleitungen an den Versorgungskreis. Je größer die Vorspannung an den Kondensatoren ist, umso niedriger ist die Spannungsbelastung an den Transistoren.

Die erfindungsgemäße Anordnung ermöglicht somit den Einsatz von Schaltelementen, die eine entsprechend geringere Spannungsfestigkeit aufweisen müssen und dadurch bessere elektrische Eigenschaften haben und zudem kostengünstiger sind.

In einer vorteilhaften Ausführungsform ist parallel zum ersten Kondensator ein erstes Element zur Spannungsbegrenzung und Symmetrierung der beiden Kondensatoren und parallel zum zweiten Kondensator ein zweites Element zur Spannungsbegrenzung und Symmetrierung der beiden Kondensatoren vorgesehen. Des Weiteren sind das erste und das zweite Element zur Spannungsbegrenzung und Symmetrierung der beiden Kondensatoren über ein weiteres spannungsbegrenzendes Element miteinander verbunden. Die entsprechenden Elemente sind dabei in der Weise zwischen Versorgungsspannung und Bezugspotenzial geschaltet, dass an den beiden Kondensatoren symmetrische Vorspannungen mit den vorgesehenen Polaritäten anliegen, ohne dass dazu eine zusätzliche Spannungsquelle erforderlich ist. Die Elemente zur Spannungsbegrenzung und Symmetrierung der beiden Kondensatoren bestimmen die Vorspannung an den Kondensatoren. Um die Kondensatoren geladen zu halten, ist das weitere spannungsbegrenzende Element vorgesehen.

Dabei ist es vorteilhaft, wenn das erste Element zur Spannungsbegrenzung und Symmetrierung der beiden Kondensatoren eine Reihenschaltung eines ersten Widerstands und einer dritten spannungsbegrenzenden Diode mit einem parallel zu dieser Reihenschaltung angeordneten zweiten Widerstand umfasst und wenn das zweite Element zur Spannungsbegrenzung und Symmetrierung der beiden Kondensatoren eine Reihenschaltung eines dritten Widerstands und einer vierten spannungsbegrenzenden Diode mit einem parallel zu dieser Reihenschaltung angeordneten vierten Widerstand umfasst und wenn zudem das weitere spannungsbegrenzende Element eine fünfte spannungsbegrenzende Diode mit einem in Reihe angeordneten fünften Widerstand umfasst. Mit dieser Schaltungsanordnung liegt an den Kondensatoren zuverlässig die gewünschte Vorspannung an. Durch die Verwendung von Widerständen und spannungsbegrenzenden Dioden kann die Vorspannung an den Kondensatoren in engen Grenzen gehalten werden.

Eine andere vorteilhafte Ausprägung sieht vor, dass das erste Element zur Spannungsbegrenzung und Symmetrierung der beiden Kondensatoren aus einer dritten spannungsbegrenzenden Diode gebildet ist und dass das zweite Element zur Spannungsbegrenzung und Symmetrierung der beiden Kondensatoren aus einer vierten spannungsbegrenzenden Diode gebildet ist und dass das weitere spannungsbegrenzendes Element als fünfte spannungsbegrenzende Diode ausgebildet ist. Sind Schwankungen der Versorgungsspannung auszuschließen oder zumindest im Verhältnis zu den Spannungsschwankungen an den Kondensatoren vernachlässigbar, kann die Vorspannung der Kondensatoren mit spannungsbegrenzenden Dioden alleine erreicht werden.

Dabei ist es für alle Ausführungsformen günstig, wenn die spannungsbegrenzenden Dioden als Zenerdioden oder als Suppressordioden ausgebildet sind. Zenerdioden haben den Vorteil, dass sie konstengünstig und einfach erhältlich sind. Bei Suppressordioden steigt bei sehr hohen Strömen die Spannung noch weniger an als bei Zenerdioden. Sie haben gegenüber Zenerdioden ein höheres Ableitvermögen.

Für einfache Anwendung ist eine Ausführungsform vorgesehen, bei welcher das erste Element zur Spannungsbegrenzung und Symmetrierung der beiden Kondensatoren aus einem ersten Widerstand und das zweite Element zur Spannungsbegrenzung und Symmetrierung der beiden Kondensatoren aus einem dritten Widerstand gebildet sind. Zudem ist das weitere spannungsbegrenzende Element als fünfter Widerstand ausgebildet. Die Schaltung baut sich somit in einfacher Weise nur aus Widerständen auf.

Die Erfindung ist auch vorteilhaft für eine Schaltungsanordnung anwendbar, welche neben einem Schaltwandler eine zusätzliche stabile Hilfsspannungsquelle, z.B. zur Versorgung von Steuerungselementen, umfasst. Die Hilfsspannungsquelle liefert dann die Vorspannung an den Kondensatoren, indem die Kondensatoren direkt oder mittels diverser spannungsbegrenzender Elemente an die Hilfsspannungsquelle angeschaltet sind.

Des Weiteren ist es günstig, wenn die Schaltelemente als Schalttransistoren ausgebildet sind. Schalttransistoren sind einerseits kostengünstig und eignen sich andererseits aufgrund ihrer elektrischen Eigenschaften sehr gut für den Einsatz in Schaltwandlern.

Die Erfindung wird nachfolgend in beispielhafter Weise unter Bezugnahme auf die beigefügten Figuren erläutert. Es zeigen in schematischer Darstellung:

Fig. 1    Primärseitige Anordnung eines Schaltwandlers mit zwei Schaltelementen nach dem Stand der Technik

Fig. 2    erfindungsgemäße Ausprägung einer primärseitigen Anordnung eines Schaltwandlers mit zwei Schaltelementen

Fig. 3    weitere erfindungsgemäße Ausprägung einer primärseitigen Anordnung eines Schaltwandlers mit zwei Schaltelementen

In Figur 1 ist eine primärseitige Anordnung nach dem Stand der Technik dargestellt. Die Primärwicklung P eines Transformators ist mit einem ersten Anschluss über ein erstes Schaltelement S1 an eine Versorgungsspannung Uz und mit einem zweiten Anschluss über ein zweites Schaltelement S2 an ein Bezugspotenzial angeschaltet. Der zweite Anschluss der Primärwicklung P ist des Weiteren mit der Anode einer ersten Diode D1 verbunden, wobei die Kathode dieser ersten Diode D1 an die Versorgungsspannung geschaltet ist. Der erste Anschluss ist des Weiteren mit der Kathode einer zweiten Diode D2 verbunden, wobei die Anode dieser zweiten Diode D2 wiederum mit dem Bezugspotenzial verbunden ist.

Über die zwei Dioden D1 und D2 kann die zum Zeitpunkt der Abschaltung beider Schaltelemente S1 und S2 im Transformator gespeicherte Energie in den Versorgungskreis zurückfließen. Dabei dreht sich am Transformator die Polarität um und die Spannung wird so hoch, bis ein Stromfluss zustande kommt. Es ergibt sich dabei folgende Spannungsbelastung am Schaltelement:

$$\text{Spannungsbelastung}_{S1/S2} = U_z + \text{Diodenspannung}_{D2/D1}$$

Eine beispielhafte Ausprägung einer erfindungsgemäßen Anordnung ist in Figur 2 dargestellt. Die Anordnung baut dabei auf der in Figur 1 dargestellten auf, mit dem Unterschied, dass die Kathode der ersten Diode D1 über einen ersten Kondensator C1 mit der Versorgungsspannung Uz verbunden ist und dass die Anoden der zweiten Diode D2 über einen zweiten Kondensator C2 mit dem Bezugspotenzial verbunden ist.

Parallel zum ersten Kondensator C1 ist zudem ein erstes Element zur Spannungsbegrenzung und Symmetrierung der beiden Kondensatoren 1 vorgesehen. In gleicher Weise ist parallel zum zweiten Kondensator C2 ein zweites Element zur Spannungsbegrenzung und Symmetrierung der beiden Kondensatoren 2 angeordnet. Diese Elemente bewirken die Vorspannung an den Kondensatoren C1, C2.

Zusätzlich ist die Kathode der ersten Diode D1 über ein spannungsbegrendzendes Element 3 mit der Anode der zweiten Diode D2 verbunden. Mit diesem spannungsbegrenzenden Element 3 werden die Kondensatoren C1, C2 auf Ladung gehalten.

Mit dieser Anordnung werden die beiden Kondensatoren C1, C2 in der Weise mit Vorspannungen U1, U2 beaufschlagt, dass am ersten Kondensator C1 eine erste positive Vorspannung U1 vom Anschlusspunkt an die Versorgungsspannung Uz zur Kathode der ersten Diode D1 anliegt und dass am zweiten Kondensator C2 eine zweite positive Vorspannung U2 von der Anode der zweiten Diode D2 zum Anschlusspunkt an das Bezugspotenzial anliegt.

Damit wird erreicht, dass an der Kathode der ersten Diode D1 ein Potenzial anliegt, das geringer als die Versorgungsspannung Uz ist und dass an der Anode der zweiten Diode D2 ein Potenzial anliegt, das höher ist als das Bezugspotenzial. Zum Zeitpunkt der Abschaltung beider Schaltelemente S1, S2 ist somit die auftretenden Spannungsbelastung an den Schaltelementen S1 und S2 um die an den Kondensatoren C1, C2 anliegenden Vorspannungen U1, U2 geringer als dies bei einer direkten Anbindung der Dioden D1, D2 an die Versorgungsspannung Uz bzw. an das Bezugspotenzial nach dem Stand der Technik der Fall wäre:

$$\text{Spannungsbelastung}_{S1/S2} =$$
$$= U_z + \text{Diodenspannung}_{D2/D1} - \text{Kondensatorspannung}_{C2/C1}$$

Die Vorspannungen U1, U2 an den Kondensatoren C1, C2 sind ausschlaggebend für die Spannungsbelastung der Schaltelemente S1, S2. Je größer die Spannung an den Kondensatoren C1, C2, umso niedriger ist die Spannungsbelastung an den Schaltelementen S1, S2. Die Vorspannungen U1, U2 an den Kondensatoren C1, C2 ist dabei so gewählt, dass die Flussverluste und Einschaltverzögerungen der Dioden D1, D2 ausgeglichen werden. Die Größe der Kondensatoren C1, C2 ist so gewählt, dass ein Abmagnetisierungsvorgang nur einen geringen Spannungshub erzeugt.

In einer anderen, nicht dargestellten Ausführungsform sind die Elemente zur Spannungsbegrenzung und Symmetrierung der beiden Kondensatoren 1, 2 durch eine Hilfsspannungsquelle ersetzt. Das weitere spannungsbegrenzende Element 3 ist dabei nicht erforderlich.

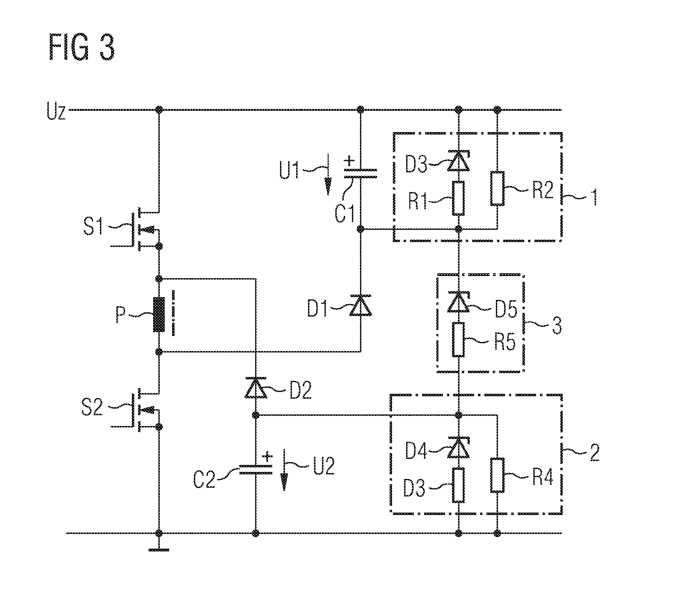

In Figur 3 ist ein Beispiel für die Ausgestaltung der Elemente zur Spannungsbegrenzung und Symmetrierung der beiden Kondensatoren 1, 2 (z.B. je 100nF/200V) sowie des weiteren spannungsbegrenzenden Elements 3 dargestellt. Dabei ist parallel zum ersten Kondensator C1 eine Reihenschaltung aus einem ersten Widerstand R1 (z.B. 10kΩ) und einer als Suppressordiode ausgebildeten dritten spannungsbegrenzenden Diode D3 (z.B. 130V Durchbruchsspannung) angeordnet. Parallel zu dieser Reihenschaltung ist ein zweiter Widerstand R2 (z.B. 200kΩ) geschaltet. Die Reihenschaltung und der zweite Widerstand R2 bilden das erste Element zur Spannungsbegrenzung und Symmetrierung der beiden Kondensatoren 1.

Parallel zum zweiten Kondensator C2 ist eine Reihenschaltung aus einem dritten Widerstand R3 (z.B. 10kΩ) und einer als Suppressordiode ausgebildeten vierten spannungsbegrenzenden Diode D4 (z.B. 130V Durchbruchsspannung) angeordnet. Parallel zu dieser Reihenschaltung ist ein vierter Widerstand R4 (z.B. 200kΩ) geschaltet. Diese Reihenschaltung und der vierte Widerstand R4 bilden das zweite Element zur Spannungsbegrenzung und Symmetrierung der beiden Kondensatoren 2.

Die beiden Elemente zur Spannungsbegrenzung und Symmetrierung der beiden Kondensatoren 1, 2 bewirken, dass die an den Kondensatoren C1, C2 anliegenden Vorspannungen U1, U2 annähernd gleich groß sind.

Das weitere spannungsbegrenzende Element 3 ist aus einem fünften Widerstand (z.B. 1kΩ) und einer in Reihe dazu angeordneten, als Suppressordiode ausgebildeten fünften spannungsbegrenzenden Diode D5 (z.B. 440V Durchbruchsspannung) gebildet. Die Vorspannungen U1, U2 an den Kondensatoren ergeben sich dann aus der Durchbruchspannung der fünften spannungsbegrenzenden Diode D5 und dem Spannungsabfall am fünften Widerstand R5:

$$U1 + U2 = Uz - \text{Durchbruchspannung}_{D5} - \text{Spannungsabfall}_{R5}$$

Die beiden Dioden D1, D2 in den Abmagnetisierungsleitungen sind bei einer Versorgungsspannung von 800 V beispielsweise bis zu 800 V ausgelegt, ebenso die beiden Schaltelemente S1 und S2.

**Patentansprüche**

1. Schaltwandler mit einer primärseitigen Transformatorwicklung (P), deren erster Wicklungsanschluss über ein erstes Schaltelement (S1) an eine Versorgungsspannung (Uz) angeschlossen ist und deren zweiter Wicklungsanschluss über ein zweites Schaltelement (S2) an ein Bezugspotenzial angeschlossen ist,
   **dadurch gekennzeichnet, dass**
   der zweite Wicklungsanschluss über eine erste Diode (D1) und einen ersten Kondensator (C1) mit der Versorgungsspannung (Uz) verbunden ist und dass der erste Wicklungsanschluss über eine zweite Diode (D2) und einen zweiten Kondensator (C2) an das Bezugspotenzial angeschlossen ist und dass an jeden Kondensator (C1, C2) eine Einrichtung zur Erzeugung einer Vorspannung angeschaltet ist.

2. Schaltwandler nach Anspruch 1, **dadurch gekennzeichnet, dass** parallel zum ersten Kondensator (C1) ein erstes Element zur Spannungsbegrenzung und Symmetrierung der beiden Kondensatoren (1) vorgesehen ist und dass parallel zum zweiten Kondensator (C2) ein zweites Element zur Spannungsbegrenzung und Symmetrierung der beiden Kondensatoren (2) vorgesehen ist und dass des Weiteren das erste und das zweite Element zur Spannungsbegrenzung und Symmetrierung der beiden Kondensatoren (1, 2) über ein weiteres spannungsbegrenzendes Element (3) miteinander verbunden sind.

3. Schaltwandler nach Anspruch 2, **dadurch gekennzeichnet, dass** das erste Element zur Spannungsbegrenzung und Symmetrierung der beiden Kondensatoren (1) eine Reihenschaltung eines ersten Widerstands (R1) und einer dritten spannungsbegrenzenden Diode (D3) mit einem parallel zu dieser Reihenschaltung angeordneten zweiten Widerstand (R2) umfasst und dass das zweite Element zur Spannungsbegrenzung und Symmetrierung der beiden Kondensatoren (2) eine Reihenschaltung eines dritten Widerstands (R3) und einer vierten spannungsbegrenzenden Diode (D4) mit einem parallel zu dieser Reihenschaltung angeordneten vierten Widerstand (R4) umfasst und dass das weitere spannungsbegrenzende Element (3) eine fünfte spannungsbegrenzende Diode (D5) mit einem in Reihe angeordneten fünften Widerstand (R5) umfasst.

4. Schaltwandler nach Anspruch 2, **dadurch gekennzeichnet, dass** das erste Element zur Spannungsbegrenzung und Symmetrierung der beiden Kondensatoren (1) aus einer dritten spannungsbegrenzenden Diode (D3) gebildet ist und dass das zweite Element zur Spannungsbegrenzung und Symmetrierung der beiden Kondensatoren (2) aus einer vierten spannungsbegrenzenden Diode (D4) gebildet ist und dass das weitere spannungsbegrenzendes Element (3) als fünfte spannungsbegrenzende Diode (D5) ausgebildet ist.

5. Schaltwandler nach einem der Ansprüche 3 bis 4, **dadurch gekennzeichnet, dass** das die spannungsbegrenzenden Dioden (D3, D4, D5) als Zenerdioden oder als Suppressordioden ausgebildet sind.

6. Schaltwandler nach Anspruch 2, **dadurch gekennzeichnet, dass** das erste Element zur Spannungsbegrenzung und Symmetrierung der beiden Kondensatoren (1) aus einem ersten Widerstand (R1) gebildet ist und dass das zweite Element zur Spannungsbegrenzung und Symmetrierung der beiden Kondensatoren (2) aus einem dritten Widerstand (R3) gebildet ist und dass das weitere spannungsbegrenzende Element (3) als fünfter Widerstand (R5) ausgebildet ist.

7. Schaltwandler nach Anspruch 1, **dadurch gekennzeichnet, dass** eine Hilfsspannungsquelle vorgesehen ist, deren Spannung an den beiden Kondensator (C1, C2) anliegt.

8. Schaltwandler nach einem der Ansprüche 1 bis 7, **dadurch gekennzeichnet, dass** die Schaltelemente (S1, S2) als Schalttransistoren ausgebildet sind.

FIG 1

FIG 2

## FIG 3